# EUROPEAN PATENT SPECIFICATION

(11) **EP 1 228 160 B1**
(45) Date of publication and mention of the grant of the patent: **22.03.2006**
(21) Application number: 00959611.5
(22) Date of filing: 30.08.2000
(51) Int. Cl.: C09K 3/14, B05D 1/06, B24D 3/00

(54) **ELECTROSTATIC DEPOSITION FORMULATIONS**
FORMULIERUNGEN ZUR ELEKTROSTATISCHEN AUFTRAGUNG
FORMULES POUR DEPOT ELECTROSTATIQUE

(30) Priority: 07.10.1999 US 414687; 12.06.2000 US 592151
(43) Date of publication of application: 07.08.2002
(73) Proprietor: Saint-Gobain Abrasives, Inc., Worcester, Massachusetts 01615-0138 (US)
(72) Inventor: SWEI, Gwo, Shin, East Amherst, NY 14051 (US); PETIGNY, Sylvain, Tonawanda, NY 14150 (US)
(74) Representative: Leidescher, Thomas
(86) International application number: PCT/US2000/023798
(87) International publication number: WO 2001/027215

(56) References cited:
- WO-A-96/32529
- DE-A- 19 726 778
- US-A- 5 009 674
- US-A- 5 360 462
- US-A- 5 368 618
- US-A- 5 864 066

## Description

### Background of the Invention

This invention relates to the deposition of abrasive materials by an electrostatic technique and particularly to formulations that greatly facilitate such a technique.

In the production of coated abrasives by a process in which an abrasive grain is deposited on an uncured or partially cured binder material the most common deposition technique involves electrostatic deposition in which the grain is projected upwards under the influence of an electrostatic field into contact with the binder. These are usually described as UP (for upward projection) processes. The grain is fed from a hopper to a moving belt which is passed through a deposition location, defined by a charged plate located below the moving belt and directly opposite and parallel to a grounded plate located above the moving belt. The substrate on to which the grain is to be deposited follows a path parallel to and above the moving belt as they both pass through the deposition location. The electrostatic field between the charged plate and the grounded plate causes the grain to be projected upwards towards the down-facing surface of the substrate where it adheres to an uncured or partially cured binder coated thereon. Providing the particle size is uniform this usually results in a very uniform deposition of the grain. However if the grain has a tendency to form clumps or if the flow to the surface from which it is projected is uneven, the uniformity of the deposition can be seriously impaired. This problem is particularly serious when very fine particle sizes are involved.

The present invention provides means for promoting free flow of the particles to be electrostatically deposited, even when their size is extremely small. The invention can be used in the feed mechanisms for an UP abrasive grain deposition process or it can be used to deposit a functional powder comprising abrasive grain on the surface of a formulation comprising abrasive grain dispersed within a curable binder in a process such as is described for example in USP 5,833,724.

### Description of the Invention

The present invention provides an electrostatically projectable powder formulation comprising abrasive particles with a grit size smaller than 36 microns (320 grit) and silica powder in an amount sufficient to raise the volume resistivity and the surface resistivity of the abrasive particles by at least fifty percent but to not more than a surface resistivity of 10⁴ ohms/square and/or a volume resistivity of 10¹⁴ ohms.cm. Preferably these maximum resistivity values are less than 10¹² ohms/square and ohms.cm respectively.

The surface and volume resistivities are measured using ASTM D4496 which is the standard test method for measuring the "DC Resistance of Conductance of Moderately Conductive Materials" and ASTM D2557 which is the standard test method for measuring the "DC Resistance of Insulating Materials". Achieving an acceptable level according to the invention in one of the parameters, (volume and surface resistivities), will imply that an acceptable level has also been attained in the other such that measurement of either parameter alone is sufficient in practical terms.

It is found that resistivity values can be correlated to the flowability of the powder such that the treated powder is more readily adapted to UP deposition in coated abrasive applications. However resistivities that are too low or too high are both undesirable. It is therefore necessary to control the resistivity to secure optimum results. Addition of a silica powder is effective to increase the resistivity of the abrasive particles but too large a resistivity creates projectability problems. It is therefore important to control the resistivity such that the optimum performance is achieved. A salient characteristic of the powder formulations of the invention in which this is achieved is that they are electrostatically projectable and have enhanced flowability.

The desired resistivity values are obtained by adding to the abrasive particles a suitable silica powder additive the amount of which will vary with the additive. In general however it is possible to secure target resistivity properties for the powders of the invention by the addition of from 0.02 to 5% by weight based on the weight of the formulation. The preferred amount of silica is from 0.05 to 3%, such as from 0.1 to 2%, based on the formulation weight.

The silica powder preferably has a particle size no greater than that of the abrasive particles.

The silica can be any of the available powdered silica products such as fumed or precipitated silicas. While silica is inherently somewhat resistant to charge-driven clumping, some silicas such as fumed silica have highly porous particle structures leading to exaggerated surface areas and with such silicas a tendency to form clumps is sometimes encountered. Where such problems are encountered with fumed silica, it can be used effectively after treatment with an additive such as hexamethyldisilazane to increase the hydrophobicity of the silica surface and minimize the tendency to agglomerate. Such treatment is frequently used by commercial suppliers of fumed silica. Even if some agglomeration of commercial fumed silica powder does occur, the forces involved are much attenuated and can readily be broken down by shear stress.

Suitable silicas which can be used with advantage include:
FG-SP FLOW-GARD® with particle size of 25 microns and a BET surface area of 220 m²/gm;
FG-AB with particle size of 20 microns and a BET surface area of 130 m²/gm;
HI-SIL® T-600 with particle size of 2.0 microns and a BET surface area of 170 m²/gm; and
HI-SIL® T-152 with particle size of 1.4 micron and a BET surface area of 150 m²/gm;
   (all these are available from PPG Corporation); and
CAB-O-SIL® TS-530 which has a particle size of 0.2 micron, a surface area of 220 m²/gm and has been given a surface treatment of hexamethyldisilazane. This product is available from Cabot Corporation.

The abrasive particles are selected from the group consisting of fused or sintered alumina, silicon carbide, cubic boron nitride, diamond or fused alumina/zirconia. The most commonly used abrasives are however based on alumina or silicon carbide. The abrasive particle size that is used corresponds to 36 microns (320 grit) or finer but the problem is usually encountered in greatest severity at grit sizes of P600 and finer. This corresponds to average particle sizes of about 25,8 microns and finer.

The formulation can also comprise, in addition to the abrasive particles and silica powder, functional additives that convey specific properties to the abrasive product such as surface lubrication, anti-static properties, enhanced grinding capabilities and so on. Such additives are included along with and in intimate mixture with the abrasive particles. These too preferably have particle sizes equal to or smaller than the abrasive particle with which they are mixed. The amount of functional additive that can be present can be for example from 5 to 75% , and preferably from 25 to 60% and most preferably from 30 to 50% of the total weight of abrasive plus additive.

Besides having resistivity levels consistent with the invention it is also found that the abrasive powders of the invention are in general much less susceptible to variations in moisture in the atmosphere or on the grain. With some grains notable alumina-based grains, the relative humidity surrounding the UP deposition apparatus very significantly affects the efficiency by which the abrasive particles are projected. The abrasive particle powders of the invention are however much more resistant to humidity variations, thereby providing a significant extra benefit from the practice of the invention.

The invention therefore further comprises a process for the UP deposition of a formulation comprising abrasive particles having a grit size smaller than 36 microns (320), and more preferably 23.6 microns (400), grit and a silica powder in an amount sufficient to raise the surface resistivity and the volume resistivity of the abrasive particles by at least fifty percent but to no greater than a surface resistivity of 10¹⁴, and preferably no greater than 10¹², ohms/square and/or a volume resistivity of no greater than 10⁴ , and preferably no greater than 10¹², ohms.cm.

The invention also comprises a process for the UP deposition of a such an abrasive formulation which comprises incorporating with the abrasive particles from 0.02 to 5% by weight based on the formulation weight of a silica with a particle size no larger than that of the abrasive particles.

When referring to the abrasive particles the size is expressed in terms of a CAMI grading process defines an average particle size which corresponds to a specific number of microns. When referring to silica or other powdered additives the particle size is expressed in microns and refers to a volume average particle size as determined by, for example, a Horiba particle size analyzer.

### Drawings

Figure 1 is perspective sketch drawing of a test bed apparatus used to evaluate the additives.
Figure 2 is a graph showing the grain flow rate in the flow evaluation apparatus used in Example 1 at three sets of specified conditions.
Figure 3 is a bar graph indicating flow improvements as a result of the use of formulations according to the invention.
Figure 4 is a bar graph showing the grinding results obtained in Example 2.
Figure 5 is a graph showing the effect of additive weight on volume resistivity of the resultant abrasive powder for three different aluminum oxide abrasive grains under two different relative humidity conditions.
Figure 6 presents the data from Figure 5 in bar chart form.
Figures 7 and 8 are similar to Figures 5 and 6 with the difference that the data collected refers to silicon carbide abrasive grain.

### Description of Preferred Embodiments

The invention is now illustrated by evaluating the properties of a number of formulations and the abrasive performance of a coated abrasive incorporating one such formulation. The Examples are therefore for demonstrative purposes and do not imply any essential limitation on the invention or the scope of its utility in all circumstances.

### Example 1

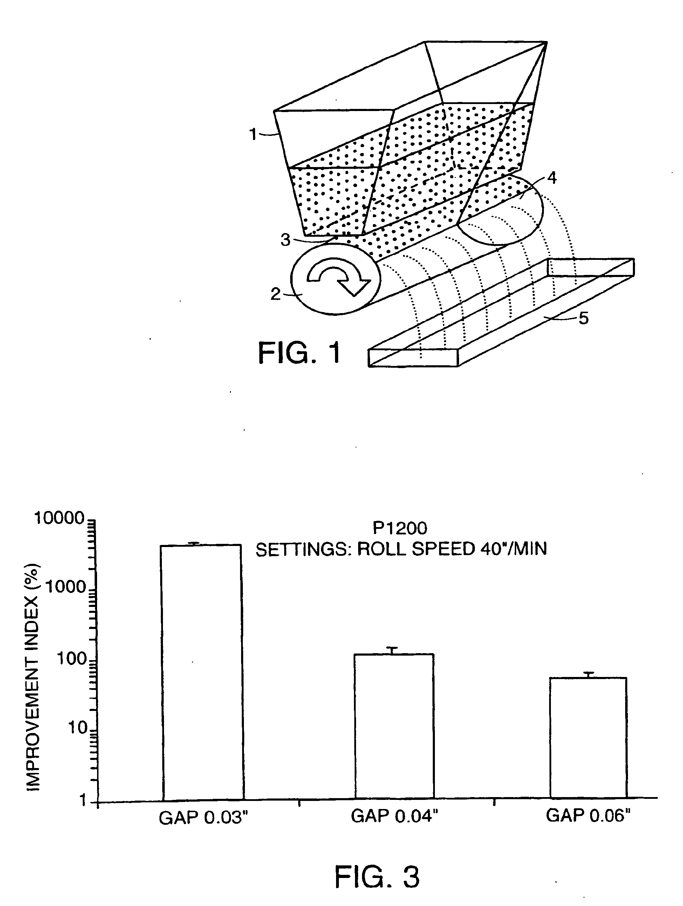

To demonstrate the flow properties of the formulations according to the present invention, a test apparatus was set up as shown in Figure 1. The apparatus comprised a hopper, 1, adapted to feed grain on to the outer surface of a roll, 2, rotating at a controllable speed about an axis parallel to the hopper axis, wherein the gap, 3, between the hopper and the roll surface is controllable. The grain passes over a wire, 4, and falls into a pan, 5.

In the operation of the above testing apparatus, powder was fed into the hopper, the gap between the slot and the drum was fixed and the drum was rotated at a given rate. The grain flow rate, in grams of grain deposited in the pan per 15 seconds period, was measured. This was repeated at a number of gap settings, drum speeds and powder compositions.

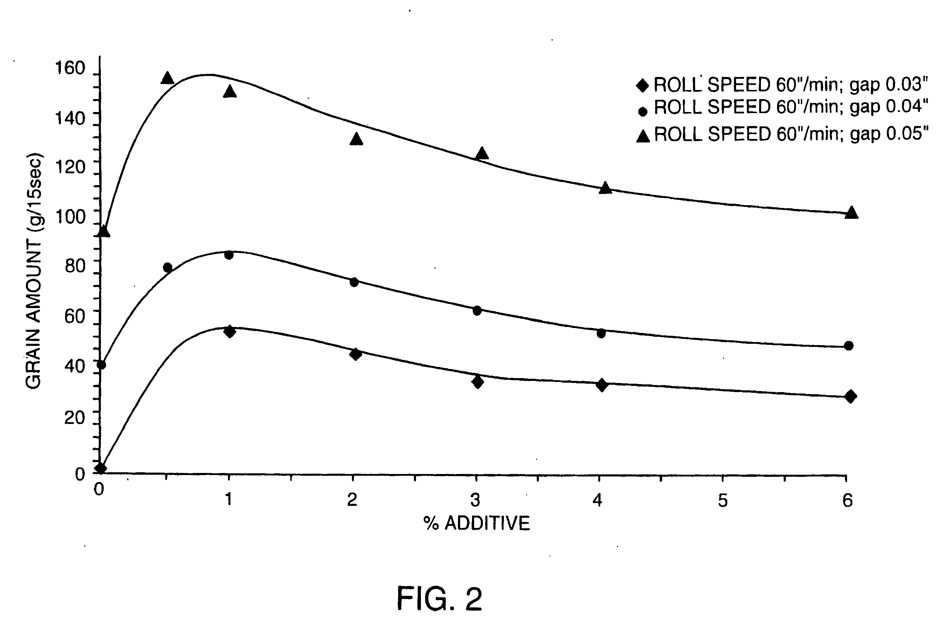

The powder run through the system comprised P 1200 grit aluminum oxide particles in a 2:1 parts by weight ratio with potassium fluoroborate and with varying amounts of a precipitated silica available from PPG Corporation under the trademark FLOW-GARDES® AB. Both the silica and the abrasive particles have an average particle size of about 20 microns. Depending on the amount of silica added the surface resistivity of the formulations ranged from about 10⁹ to about 10¹¹ ohms/square and the volume resistivities from about 10⁹ to about 10¹¹ ohms.cm. The amount of grain deposited in a collector pan in a 15 second period was measured at three different settings for the gap between the hopper and the roll surface. The results are presented in graphical form in Figure 2. As will be seen, the results for this system indicate that maximum flow is achieved at a concentration of the silica additive of about 1 % regardless of the gap. Repetition at a different roll speed yielded the same result.

A similar series of tests using the same test rig was performed to evaluate the improvement obtained with the same components but using a constant roll speed of 40 inches/minute, (about 1 meter/minute) and three different gap settings of 0.03", 0.04" and 0.06", (0.76mm, 1.02mm and 1.52mm respectively). Each formulation according to the invention comprised 2% by weight of the same silica mixed with the same P1200 alumina and potassium fluoroborate particles. Each was compared against the same composition but without the silica and before conducting the test, the powder mixture had been stored at 37,8 (100°F)for three weeks to ensure optimum free-flowing properties. No such drying precautions were taken with the products according to the invention.

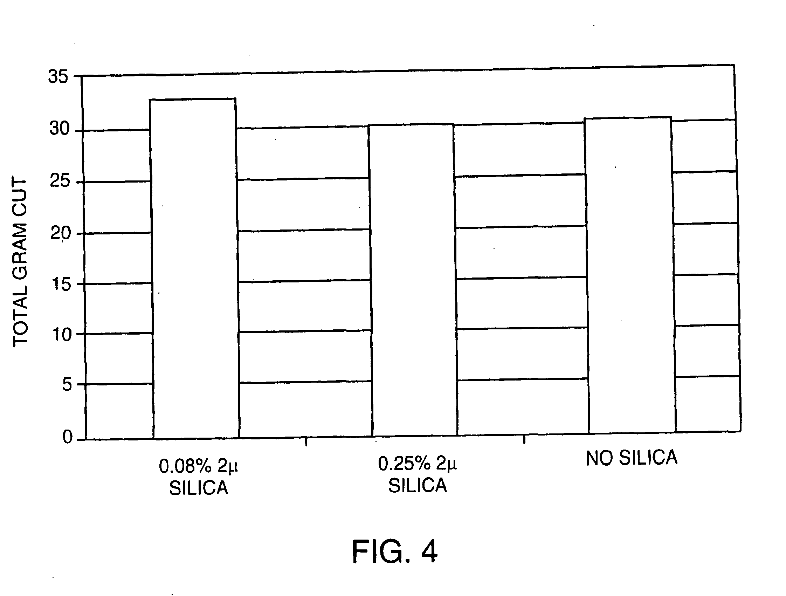

The results are shown in Figure 3 in which the percentage improvement (in terms of grams of powder deposited in a 15 second period) over the silica- free composition under the same conditions is shown in bar chart form. The length of the bar indicates the percentage improvement over the non-silica-containing product. An error bar on each bar indicates the degree of variability in the results that are summarized in the chart. As might be expected, where the gap is larger the improvement displayed is smaller because the wider gap allows through some of the agglomerated particles. It is however still significant.

Evaluations at alumina particle sizes larger than P 1200 but with the other parameters held constant showed a significant improvement at P1000 alumina particle size but below that level the test conditions were not sensitive enough to display a clear improvement. In addition as indicated above the problem of particle agglomeration becomes less acute with increasing particle size. To examine such larger particle sizes a funnel with an outflow hole with a 0.1", (2.54mm), diameter was used to evaluate flow rates. Here it was found that where flow is impeded, the addition of 2% of the silica was effective at increasing the flow rate of alumina with 36 microns (320 grit) and smaller particle sizes.

### Example 2

In this Example the grinding performance of a coated abrasive with an engineered surface was evaluated with and without the silica additive: The coated abrasive substrate was obtained by depositing a formulation comprising an alumina abrasive grit dispersed in a UV-curable acrylate binder resin and then applying to the surface of the deposited formulation a layer of a powder comprising a 2:1 weight ratio of P 1200 alumina abrasive particles and potassium fluoroborate particles. A repeating pattern was embossed on the formulation and the resin binder component was cured. Three samples were prepared that were identical except that the powder layer deposited on the uncured surface of two of the abrasive/binder resin formulations contained silica and the third had none.

The samples were then tested for abrasive performance on a ring of 3 04 stainless steel with a pressure of 110,3 kPa (16 psi), (applied to the back of the coated abrasive using a-Matchless-B contact wheel), and a relative movement speed of 2 540 cm/s (5000 sfpm).

The first formulation according to the invention comprised a precipitated silica with a BET surface area of 170 m²/gm and an average particle size of about 2 microns in an amount of 0.08% by weight based on the powder weight. The second contained 0.25% by weight, based on the powder weight of the 20 micron silica used in Example 1. The third contained no silica.

The results of the grinding test are shown in Figure 4. As will be seen, the effect of the grinding results of the incorporation of silica is very minor and at very low concentrations may even be beneficial.

### Example 3

In this Example the objective is to show the impact of the addition of a silica additive on the resistivity of the resulting abrasive grain powder. In all cases the additive was a fumed silica powder with a hexamethyldisilazane treatment This silica is available from Cabot Corporation under the designation "TS 530".

Two sets of tests were performed. The first was carried out on aluminum oxide abrasive powders available from Treibacher AG under the designations:
BFRPL P600 (FEPA P-grading with 25.8 micron average particle size);
FRPL P800 (21.8 micron average particle size); and
FRPL P1500 (12.6 micron average particle size).

The second set of tests was carried on silicon carbide abrasive powders available from Saint-Gobain Industrial Ceramics Inc. under the designations:
E299 400 (ANSI grading 22.1 microns);
E299 600 (ANSI grading 14.5 micron); and
E599 P1500 (FEPA P-grading, 12.6 micron).

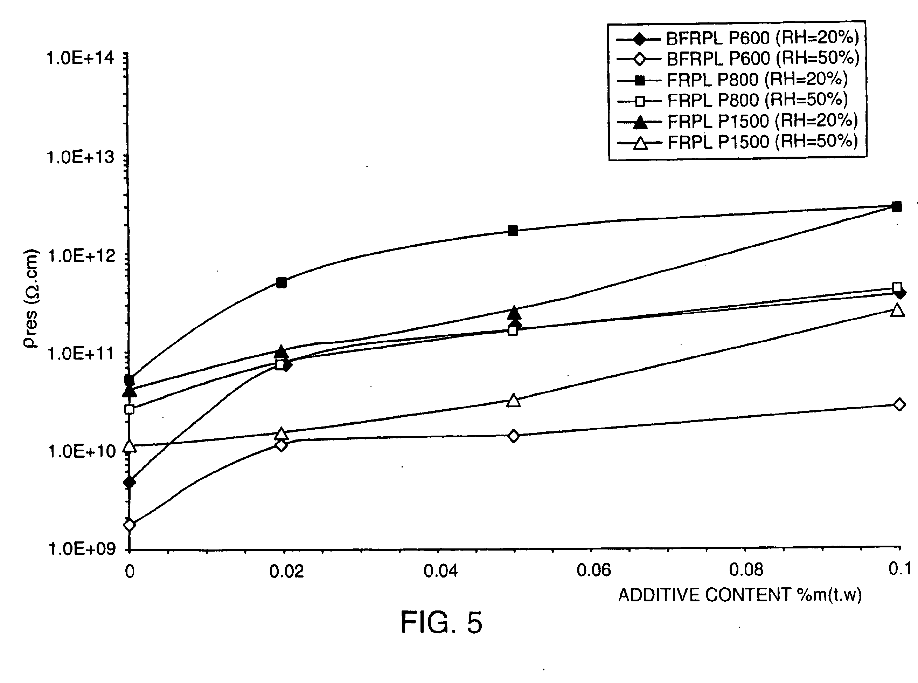

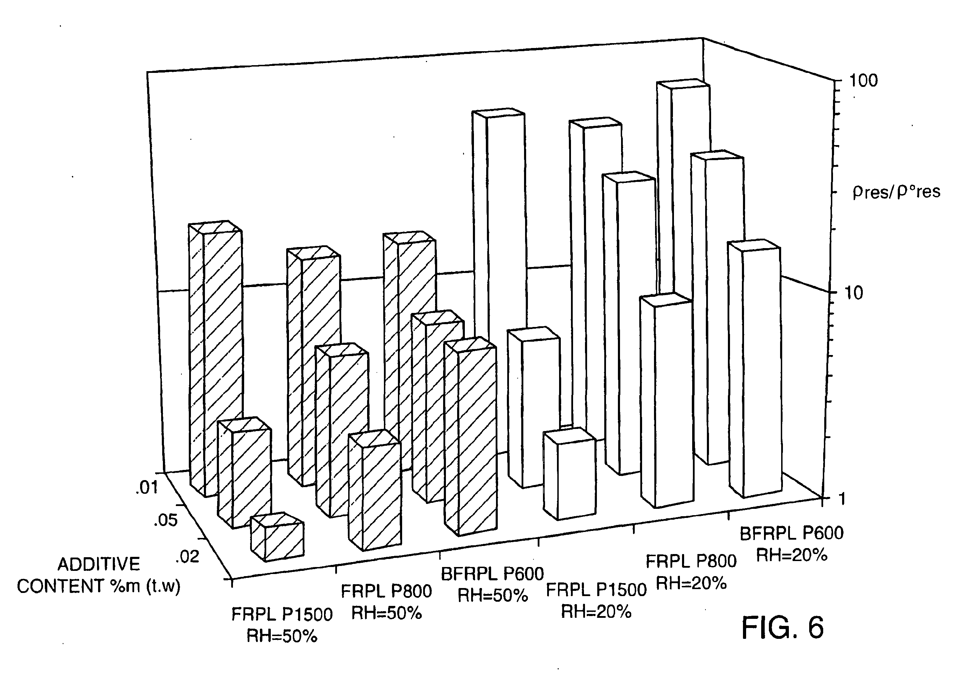

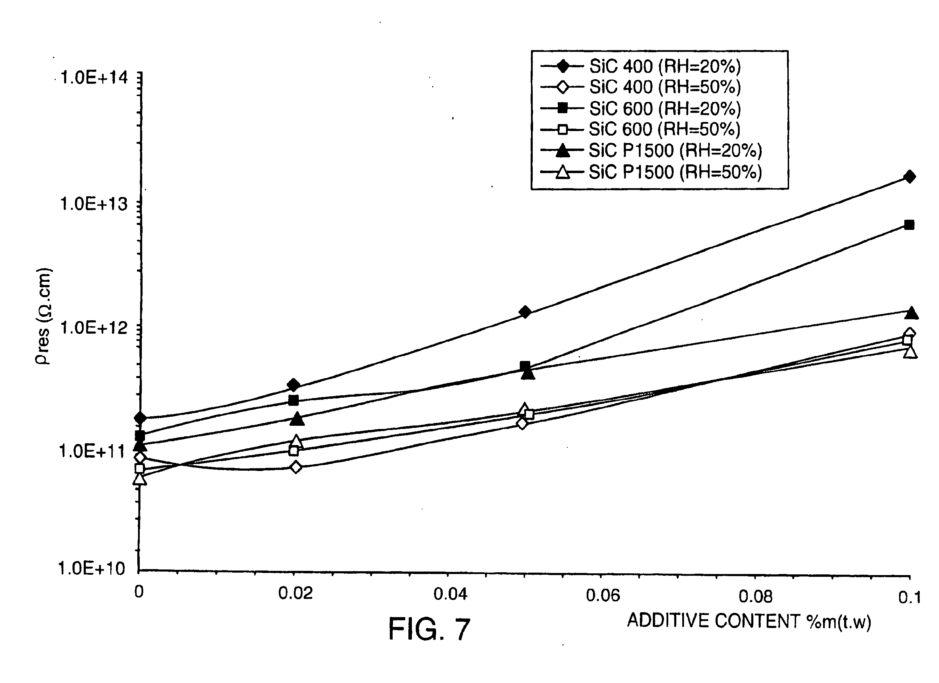

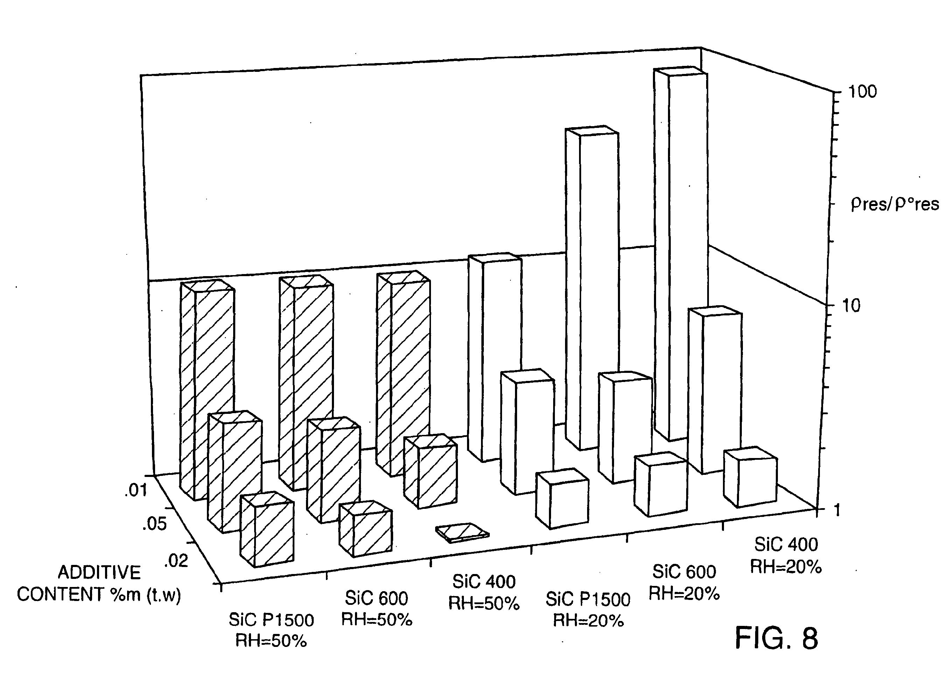

In each case the powders were given silica powder additions at a number of levels and the volume resistivity was measured at relative humidity levels of 20% and 50%. The results of the evaluations are shown in Figures 5-8. In Figures 5 and 7 the variation of resistivity with percent additive is tracked for the aluminum oxide and silicon carbide grains respectively. Figures 6 and 8 present the data in Figures 5 and 7 respectively in bar chart form as a comparison with the resistivity measurement for the grain in the absence of any modifier. To do this the resistivity value reported in the graph is divided by the resistivity of the identical unmodified abrasive grain at the same relative humidity. This shows more clearly the dramatic improvement in resistivity upon addition of relatively modest amounts of the silica additive.

## Claims

1. An electrostatically projectable powder formulation comprising abrasive particles selected from the group consisting of fused or sintered alumina, silicon carbide, cubic boron nitride, diamond, and fused alumina/zirconia, with a grit size smaller than 36 micron (320 grit) and silica powder in an amount sufficient to raise the volume resistivity and the surface resistivity of the abrasive particles by at least fifty percent but no more than a surface resistivity of 10¹⁴ ohms/square and/or a volume resistivity of 10¹⁴ ohms·cm.

2. A powder formulation according to Claim 1 in which the surface and volume resistivity values are less then 10¹² ohms/square and 10¹² ohms·cm, respectively.

3. A powder formulation according to Claim 1 in which the amount of silica powder added represents from 0.02 to 5% by weight of the powder formulation.

4. A powder formulation according to Claim 1 in which the silica is selected from the group consisting of precipitated silica; fumed silica; fumed silica treated to provide the silica particles with a hydrophobic surface; and mixtures thereof.

5. A powder formulation according to Claim 1 in which the size of the silica particles is not larger than that of the abrasive particles.

6. A powder formulation according to Claim 1 in which the abrasive particles are 25,8 micron (P600) grit and smaller.

7. A process for the preparation of a coated abrasive which comprises a step in which a powder formulation is electrostatically deposited on a substrate and the formulation comprises abrasive particles selected from the group consisting of fused or sintered alumina, silicon carbide, cubic boron nitride, diamond, and fused alumina/zirconia having a particle size finer than 36 micron (320 grit) and a silica powder in an amounts sufficient to raise the volume resistivity and the surface resistivity of the abrasive particles by at least fifty percent but to not more than a surface resistivity of 10¹⁴ ohms/square and/or a volume resistivity of 10¹⁴ ohms·cm.

8. A process according to Claim 7 in which the surface and volume resistivity values of the powder formulation are less then 10¹² ohms/square and 10¹² ohms·cm, respectively.

9. A process according to Claim 7 in which the amount of silica powder added represents from 0.02 to 5% by weight of the total formulation - weight.

10. A process according to Claim 7 in which the silica is selected from the group consisting of precipitated silica; fumed silica; fumed silica treated to provide silica particles with a hydrophobic surface; and mixtures thereof.

11. A process according to Claim 7 in which the silica particles have an average size that is not larger than that of the abrasive particles.

12. A process according to Claim 7 in which the abrasive particles have a size that is not greater than 25.8 micron (P600 grit).

## Patentansprüche

1. Elektrostatisch projizierbares Pulvergemisch enthaltend Schleifmittelpartikel ausgewählt aus einer Gruppe bestehend aus Schmelzkorund oder gesintertem Aluminiumoxid, Siliziumcarbid, kubischem Bornitrid, Diamant und Schmelzkorund/-zirkon, mit einer Korngröße kleiner als 36 µm (320 grit) und Siliziumdioxidpulver in einer Menge, die ausreicht um den spezifischen Volumenwiderstand und den Flächenwiderstand der Schleifmittelpartikel um mindestens 50 %, aber auf nicht mehr als einem Flächenwiderstand von 10¹⁴ Ohm/Quadrat und/oder einem Volumenwiderstand von 10¹⁴ Ohm cm zu erhöhen.

2. Pulvergemisch gemäß Anspruch 1, wobei die Flächen- und spezifische Volumenwiderstandswerte jeweils kleiner als 10¹² Ohm/Quadrat und 10¹² Ohm cm sind.

3. Pulvergemisch gemäß Anspruch 1, wobei die Menge an zugesetztem Siliziumdioxidpulver 0,02 bis 5 Gew. % des Pulvergemisches darstellt.

4. Pulvergemisch gemäß Anspruch 1, wobei das Siliziumdioxid ausgewählt ist aus der Gruppe bestehend aus ausgefälltem Siliziumdioxid, pyrogenem Kieselsäurepulver, pyrogenem Kieselsäurepulver, das behandelt wurde, um die Siliziumdioxidpartikel mit einer hydrophoben Oberfläche bereitzustellen; sowie deren Mischungen.

5. Pulvergemisch gemäß Anspruch 1, wobei die Siliziumdioxidpartikel nicht größer als die Schleifmittelpartikel sind.

6. Pulvergemisch gemäß Anspruch 1, wobei die Schleifmittelpartikel 25,8 µm (P600 grit) und kleiner sind.

7. Verfahren zur Herstellung eines beschichteten Schleifmittels umfassend einen Schritt bei dem ein Pulvergemisch elektrostatisch auf ein Substrat abgelagert wird und das Gemisch Schleifmittelpartikel, ausgewählt aus einer Gruppe bestehend aus Schmelzkorund oder gesintertem Aluminiumoxid, Siliziumcarbid, kubisches Bomitrid, Diamant und Schmelzkorund/-zirkon, mit einer Partikelgröße kleiner als 36 µm (320 grit) und Siliziumdioxidpulver in einer Menge die ausreicht um den spezifischen Volumenwiderstand und den Flächenwiderstand der Schleifmittelpartikel um mindestens 50 %, aber auf nicht mehr als einem Flächenwiderstand von 10¹⁴ Ohm/Quadrat und/oder einem Volumenwiderstand von 10¹⁴ Ohm cm, zu erhöhen, enthält.

8. Verfahren gemäß Anspruch 7, wobei die Flächen- und spezifische Volumenwiderstandswerte des Pulvergemisches kleiner sind als jeweils 10¹² Ohm/Quadrat und 10¹² Ohm cm.

9. Verfahren gemäß Anspruch 7, wobei die Menge an zugesetztem Siliziumdioxidpulver 0,02 bis 5 Gew. % des Gesamtgewichts des Pulvergemisches darstellt.

10. Verfahren gemäß Anspruch 7, wobei das Siliziumdioxid ausgewählt ist aus der Gruppe bestehend aus ausgefälltem Siliziumdioxid, pyrogenem Kieselsäurepulver, pyrogenem Kieselsäurepulver, das behandelt wurde, um die Siliziumdioxidpartikel mit einer hydrophoben Oberfläche bereitzustellen; sowie deren Mischungen.

11. Verfahren gemäß Anspruch 7, wobei die Siliziumdioxidpartikel durchschnittlich nicht größer als die Schleifmittelpartikel sind.

12. Verfahren gemäß Anspruch 7, wobei die Schleifmittelpartikel nicht größer als 25,8 µm (P600 grit) sind.

## Revendications

1. Formulation de poudre projetable par voie électrostatique, comprenant des particules abrasives sélectionnées dans le groupe consistant en l'alumine fondue ou frittée, le carbure de silicium, le nitrure de bore cubique, le diamant et l'alumine/oxyde de zirconium fondus, ayant une taille de grain inférieure à 36 microns (320 grit) et de la poudre de silice en une quantité suffisante pour augmenter la résistivité en volume et la résistivité de surface des particules abrasives d'au moins cinquante pour cent sans que la résistivité de surface excède 10¹⁴ ohms/carré et/ou que la résistivité en volume excède 10" ohms·cm.

2. Formulation de poudre selon la revendication 1, dans laquelle les valeurs de résistivité de surface et en volume sont inférieures, respectivement, à 10¹² ohms/carré et 10¹² ohms·cm.

3. Formulation de poudre selon la revendication 1, dans laquelle la quantité de poudre de silice ajoutée représente de 0,02 à 5 % en poids de la formulation de poudre.

4. Formulation de poudre selon la revendication 1, dans laquelle la silice est sélectionnée dans le groupe consistant en la silice précipitée ; la silice pyrogénique ; la silice pyrogénique traitée pour donner aux particules de silice une surface hydrophobe ; et leurs mélanges.

5. Formulation de poudre selon la revendication 1, dans laquelle la taille des particules de silice n'est pas supérieure à celle des particules abrasives.

6. Formulation de poudre selon la revendication 1, dans laquelle les particules abrasives ont une taille de grain de 25,8 microns (P600 grit) ou moins.

7. Procédé de préparation d'un abrasif appliqué qui comprend une étape au cours de laquelle une formulation de poudre est déposée par voie électrostatique sur un substrat et la formulation comprend des particules abrasives sélectionnées dans le groupe consistant en l'alumine fondue ou frittée, le carbure de silicium, le nitrure de bore cubique, le diamant et l'alumine/oxyde de zirconium fondus, ayant une taille de particule plus fine que 36 microns (320 grit) et de la poudre de silice en une quantité suffisante pour augmenter la résistivité en volume et la résistivité de surface des particules abrasives d'au moins cinquante pour cent sans que la résistivité de surface excède 10¹⁴ ohms/carré et/ou que la résistivité en volume excède 10¹⁴ ohms·cm.

8. Procédé selon la revendication 7, dans lequel les valeurs de résistivité de surface et en volume de la formulation de poudre sont inférieures, respectivement, à 10¹² ohms/carré et 10¹² ohms•cm.

9. Procédé selon la revendication 7, dans lequel la quantité de poudre de silice ajoutée représente de 0,02 à 5 % en poids par rapport total de la formulation.

10. Procédé selon la revendication 7, dans lequel la silice est sélectionnée dans le groupe consistant en la silice précipitée ; la silice pyrogénique ; la silice pyrogénique traitée pour donner aux particules de silice une surface hydrophobe ; et leurs mélanges.

11. Procédé selon la revendication 7, dans lequel les particules de silice ont une taille moyenne qui n'est pas supérieure à celle des particules abrasives.

12. Procédé selon la revendication 7, dans lequel particules abrasives ont une taille qui n'est pas supérieure à 25,8 microns (P600 grit).
